# EUROPÄISCHE PATENTSCHRIFT

(11) **EP 0 955 199 B1**
(45) Veröffentlichungstag und Bekanntmachung des Hinweises auf die Patenterteilung: **25.08.2004**
(21) Anmeldenummer: 99107776.9
(22) Anmeldetag: 20.04.1999
(51) Int. Cl.: B60K 15/04

(54) **Kraftstoffbehälter**
Fuel tank
Réservoir de carburant

(30) Priorität: 04.05.1998 DE 19819779
(43) Veröffentlichungstag der Anmeldung: 10.11.1999
(73) Patentinhaber: Siemens Aktiengesellschaft, 80333 München (DE)
(72) Erfinder: Zapp, Thomas, Dr., 44265 Dortmund (DE)

(56) Entgegenhaltungen:
- DE-A- 19 511 073
- US-A- 5 305 903
- US-A- 5 427 263

## Beschreibung

Die Erfindung betrifft einen Kraftstoffbehälter mit einer Öffnung zum Einfüllen von Kraftstoff und mit einem in die Öffnung hineinragenden Einfüllrohr, mit einer dichtenden Verbindung des Einfüllrohres mit dem Kraftstoffbehälter, wobei das Einfüllrohr in radialer Richtung von der Öffnung beabstandet ist.

Ein solcher Kraftstoffbehälter ist beispielsweise aus der USA 5,305,903 bekannt. Bei dieser ist eine Dichtung zwischen dem Einfüllrohr und der Öffnung im Kraftstoffbehälter eingepresst. Eine Klemmhülse hält die Dichtung in ihrer vorgesehenen Position auf einem die Öffnung umgebenden Stutzen. Nachteilig bei diesem Kraftstoffbehälter ist, dass er für Service- oder Montagearbeiten eine weitere Öffnung benötigt, durch die Bauteile in den Innenraum des Kraftstoffbehälters eingesetzt werden können. Da das Einfüllrohr meist einen sehr kleinen Querschnitt aufweist, lassen sich in der Regel keine Bauteile durch die Öffnung des Einfüllrohres montieren. Zudem ist das Einfüllrohr nur mit großem Aufwand, beispielsweise durch Zerstörung der Klemmhülse, zu demontieren.

Solche Kraftstoffbehälter befinden sich bei heutigen Kraftfahrzeugen zumindest auf der Unterseite des Bodenbleches im hinteren Teil der Kraftfahrzeuge. Die Kraftstoffbehälter besitzen neben dem Einfüllrohr zum Befüllen des Kraftstoffbehälters zumindest einen Anschluss für eine zum Antrieb des Kraftfahrzeuges führende Kraftstoffleitung. Zur Versorgung des Antriebs mit Kraftstoff sind eine Reihe von Einbauten im Innenraum des Kraftstoffbehälters erforderlich, insbesondere um die Versorgung mit Kraftstoff in allen möglichen Fahrsituationen zu gewährleisten. Beispielsweise sind hierfür Leitbleche, aber auch Saugstrahlpumpen erforderlich, die den Kraftstoff aus verschiedenen, tiefer gelegenen Bereichen in einen Schwalltopf fördern, von wo der Kraftstoff in die Kraftstoffleitung gelangt. Die hierzu erforderlichen Kraftstoffpumpen werden zunehmend im Inneren des Kraftstoffbehälters angeordnet. Dies ist vor allem aufgrund der gestiegenen gesetzlichen Anforderungen an die Permeationsdichte vorteilhaft. Es wird daher versucht, einen möglichst großen Anteil der erforderlichen Anschluss- und Leitungselemente im Inneren des Kraftstoffbehälters zu verlegen, damit sie gegenüber der Umgebung zusätzlich durch die Kraftstoffbehälterwandung geschützt sind. Bei der Vielzahl der im Inneren des Kraftstoffbehälters anzubringenden Einbauten ergibt sich zwangsläufig das Problem, dass der Innenraum des Kraftstoffbehälters relativ schlecht zugänglich ist. Es müssen daher zumindest für die vergleichsweise großen Bauteile, wie beispielsweise die Kraftstoffpumpe, Service- oder Wartungsöffnungen vorgesehen werden. Nachteilig bei diesen Öffnungen wirkt sich die damit verbundene, verschlechterte Permeationsdichtheit aus. Ein erheblicher Teil der verbesserten Permeationsdichtheit, die durch die im Innenraum angeordneten Einbauten erreicht werden kann, geht durch solche Öffnungen wieder verloren. Es sind bereits Vorschläge bekannt, die Einbauten schon im Herstellungsprozess im Inneren des Kraftstoffbehälters anzuordnen, so das bei der anschließenden Montage keine Montageöffnungen mehr erforderlich sind. Nachteilig hierbei wirkt sich aus, dass für später anfallende Reparaturen eine entsprechende Wartungsöffnung erforderlich ist, da anderenfalls der Kraftstoffbehälter komplett ausgetauscht werden müsste.

Weiterhin wirkt sich bei den nach dem Stand der Technik bekannten Kraftstoffbehältern die für eine Öffnung erforderliche, spezielle Ausformung der Kraftstoffbehälterwandung aus, die mit einer Verringerung des maximal möglichen Füllvolumens verbunden ist. Unter der Prämisse, bei einem vorgegebenen, zur Verfügung stehenden Einbauraum ein maximales Füllvolumen zu erreichen, bedeutet jede Öffnung in dem Kraftstoffbehälter eine unerwünschte Einschränkung.

Darüber hinaus ist die zum Einbau der Kraftstoffpumpe vorgesehene Öffnung häufig im Bereich der Rücksitzbank angeordnet und damit nur vom Innenraum zugänglich. Wartungs- oder Reparaturarbeiten im Inneren des Kraftstoffbehälters sind daher neben einer unangenehmen Geruchsbelästigung auch mit einer Gesundheitsgefährdung, beispielsweise durch freigesetzte Benzole und andere Stoffe, verbunden.

Der Erfindung liegt das Problem zugrunde, einen Kraftstoffbehälter der genannten Art derart auszuführen, dass dieser neben den zwingend erforderlichen Öffnungen, insbesondere der Einfüllöffnung, keine weiteren Montage- oder Wartungsöffnungen erfordert. Es soll dabei insbesondere auf volumenvermindernde, spezielle Ausformungen der Kraftstoffbehälterwandung und auf lediglich vom Innenraum des Kraftfahrzeuges zugängliche Öffnungen verzichtet werden.

Dieses Problem wird erfindungsgemäß dadurch gelöst, dass die Öffnung als Service- oder Montageöffnung mit einem vorgesehenen, im Verhältnis zu dem Einfüllrohr großen Durchmesser ausgebildet ist, dass die dichtende Verbindung des Einfüllrohres mit dem Kraftstoffbehälter eine einen Spalt zwischen der Öffnung und dem Einfüllrohr überbrückende Manschette aufweist und dass eine Verbindung der Manschette mit dem Kraftstoffbehälter lösbar gestaltet ist. Hierdurch kann die Öffnung zum Einfüllen von Kraftstoff dienen und zugleich die Funktion einer Service- oder Wartungsöffnung erfüllen. Hierzu besitzt die Öffnung einen entsprechend großen Durchmesser, wobei die Öffnung im Betriebszustand mittels der Manschette dichtend verschlossen ist. Falls der Zugang zum Inneren des Kraftstoffbehälters erforderlich wird, kann die Manschette mit dem Einfüllrohr vom Kraftstoffbehälter gelöst werden, so dass ein problemloser Eingriff in den Innenraum möglich ist. Die Zahl der bei dem Kraftstoffbehälter erforderlichen Öffnungen kann daher erfindungsgemäß reduziert werden. Durch die bevorzugte Anordnung des Einfüllrohres in einem hinteren, seitlichen Bereich des Fahrzeuges ist darüber hinaus ein Zugang von außen, vorzugsweise durch den Radkasten, möglich. Eine Geruchsbelästigung im Innenraum kann dadurch vermieden werden.

Die Manschette kann im Wesentlichen flach auf die Oberfläche des Kraftstoffbehälters aufgesetzt und mit dem Kraftstoffbehälter verbunden werden. Besonders einfach ist der Anschluss der Manschette an den Kraftstoffbehälter bei einer Ausführungsform der Erfindung, bei der der Kraftstoffbehälter einen Rohrstutzen hat und die Manschette auf den Rohrstutzen aufgesetzt ist. Die Manschette lässt sich dadurch mühelos mit dem Rohrstutzen verbinden und ist dabei leicht abzudichten. Durch die Überschneidung der Manschette mit dem Rohrstutzen entsteht dabei eine leicht zu bedienende Verbindung, die zugleich eine hohe mechanische Belastbarkeit besitzt.

Hierbei ist eine Weiterbildung der Erfindung besonders günstig, bei der die Manschette in etwa kegelförmig ausgeführt ist und mit ihrer weiten Öffnung den Rohrstutzen umschließt. Hierdurch kann die Manschette Maßabweichungen, die beim Einbau des Kraftstoffbehälters und des Einfüllrohres in dem Kraftfahrzeug entstehen, ausgleichen. Die Manschette kann dabei den Rohrstutzen auch dann noch dichtend umschließen, wenn dieser zu dem Einfüllrohr versehentlich schiefwinklig angeordnet ist. Die mechanische Stabilität der Manschette kann zugleich weiter verbessert werden.

Besonders vorteilhaft ist dabei auch eine Ausführungsform der Erfindung, bei der die Manschette mit dem Einfüllrohr einteilig verbunden ist. Hierdurch kann die anderenfalls zwischen der Manschette und dem Einfüllrohr erforderliche Dichtung entfallen. Die Permeationsdichtheit lässt sich dadurch weiter erhöhen und zugleich die Anzahl der Bauteile reduzieren, woraus sich neben einer Verminderung des Gewichtes auch eine Senkung der Herstellkosten ergibt.

Zum Entfernen der Manschette muss zunächst das zumeist mit einem Karosserieelement verbundene Einfüllrohr an beiden Enden aus seinen Halterungen gelöst werden. Anschließend kann das Einfüllrohr aus der Öffnung herausgenommen werden. Besonders einfach ist demgegenüber eine Weiterbildung der Erfindung, bei der die Manschette einen flexiblen Abschnitt hat. Dadurch ist es zum Entfernen des Einfüllrohres nicht erforderlich, zunächst die übrigen Befestigungen des Einfüllrohres zu lösen. Vielmehr braucht die beispielsweise mit einem Faltenbalg versehene, flexible Manschette lediglich an ihrem dem Kraftstoffbehälter zugewandten Ende gelöst werden. Zugleich ist die derart ausgeführte Manschette erheblich leichter zu montieren, da Ungenauigkeiten in der Passung durch den flexiblen Abschnitt ausgeglichen werden.

Eine weitere, besonders vorteilhafte Weiterbildung der Erfindung ist dadurch gegeben, dass die Manschette mittels einer Schnellkupplung mit dem Kraftstoffbehälter verbunden ist. Das Lösen der Verbindung zwischen der Manschette und dem Kraftstoffbehälter kann daher problemlos auch ohne spezielles Werkzeug erfolgen, wodurch auch der für entsprechende Wartungsarbeiten erforderliche Zeitaufwand reduziert werden kann.

Besonders günstig ist hierbei eine Weiterbildung, bei der die Kupplung einen Bajonettverschluss hat. Hierdurch ist die Bedienung problemlos auch ohne Werkzeug möglich, wobei Fehler bei der Montage weitgehend ausgeschlossen sind.

Eine andere, besonders vorteilhafte Weiterbildung der Erfindung ist dann gegeben, wenn das Einfüllrohr ein Rückschlagventil hat. Hierdurch kann der in dem Kraftstoffbehälter befindliche Kraftstoff auch unter extremen Fahrbedingungen nicht in das Einfüllrohr zurückfließen. Weiterhin verhindert das Rückschlagventil ein plötzliches Überlaufen des Kraftstoffbehälters bei der Befüllung.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in
- Fig.1: eine geschnittene Darstellung eines erfindungsgemäßen Kraftstoffbehälters,
- Fig.2: eine geschnittene Darstellung einer anderen Ausführungsform des Kraftstoffbehälters.

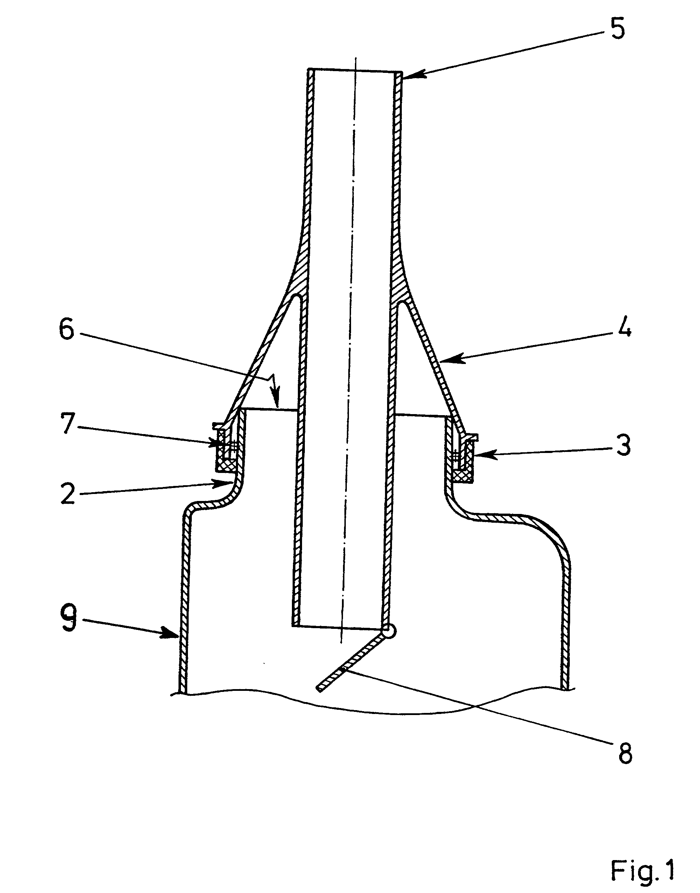

Figur 1 zeigt eine seitliche Schnittdarstellung eines lediglich abschnittsweise dargestellten Kraftstoffbehälters 1 mit einem oben angesetzten Rohrstutzen 2. Der Rohrstutzen 2 trägt außenseitig einen Rand 3, in den eine Manschette 4 dichtend eingesetzt ist. Die Manschette 4 ist kegelförmig ausgeführt und ist an ihrem oberen Ende einteilig mit einem Einfüllrohr 5 verbunden. Das Einfüllrohr 5 ragt durch eine Öffnung 6 des Kraftstoffbehälters 1 in dessen Innenraum und ist dabei gegenüber der Öffnung 6 allseitig beabstandet. Die Öffnung 6 ist im Vergleich zu dem Außendurchmesser des Einfüllrohres 5 relativ groß ausgeführt und kann so zugleich auch als Montage- oder Serviceöffnung verwendet werden. Hierzu ist die Manschette 4 mit einer als Bajonettverschluss ausgeführten Kupplung 7 ausgestattet, die lediglich beispielhaft dargestellt ist. Zum Schutz des Kraftstoffbehälters 1 gegen den unter ungünstigen Fahrbedingungen möglicherweise in das Einfüllrohr 5 zurücklaufenden Kraftstoff ist das Einfüllrohr 5 mit einem als Rückschlagklappe ausgeführten Rückschlagventil 8 ausgerüstet.

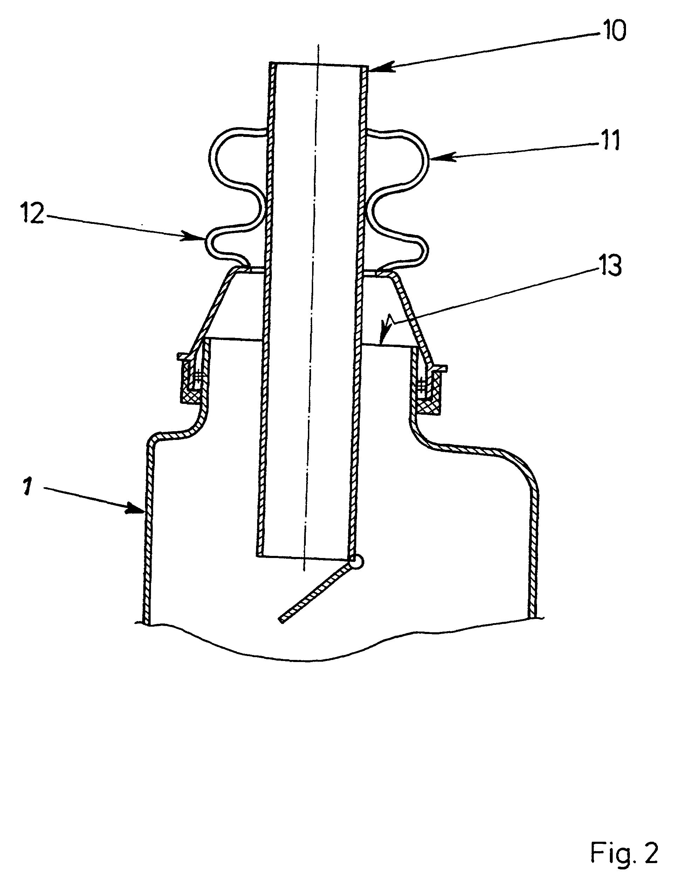

Figur 2 zeigt in einer ebenfalls seitlichen Schnittdarstellung einen gegenüber der in Figur 1 dargestellten Ausführungsform lediglich leicht abgewandelten Kraftstoffbehälter 9. Hierbei ist ein Einfüllrohr 10 mittels eines als Faltenbalg ausgeführten, flexiblen Abschnitts 11 einer Manschette 12 mit dem Kraftstoffbehälter 9 verbunden, wodurch die Montage und Demontage wesentlich vereinfacht wird.

## Patentansprüche

1. Kraftstoffbehälter (1, 9) mit einer Öffnung (6, 13) zum Einfüllen von Kraftstoff und mit einem in die Öffnung (6, 13) hineinragenden Einfüllrohr (5, 10), mit einer dichtenden Verbindung des Einfüllrohres (5, 10) mit dem Kraftstoffbehälter (1, 9), wobei das Einfüllrohr (5, 10) in radialer Richtung von der Öffnung (6, 13) beabstandet ist, **dadurch gekennzeichnet, dass** die Öffnung (6, 13) als Service- oder Montageöffnung mit einem vorgesehenen, im Verhältnis zu dem Einfüllrohr (5, 10) großen Durchmesser ausgebildet ist, dass die dichtende Verbindung des Einfüllrohres (5, 10) mit dem Kraftstoffbehälter (1, 9) eine einen Spalt zwischen der Öffnung (6, 13) und dem Einfüllrohr (5, 10) überbrückende Manschette (4, 12) aufweist und dass eine Verbindung der Manschette (4, 12) mit dem Kraftstoffbehälter (1, 9) lösbar gestaltet ist.

2. Kraftstoffbehälter nach Anspruch 1, **dadurch gekennzeichnet, dass** der Kraftstoffbehälter (1, 9) einen Rohrstutzen (2) hat und die Manschette (4, 12) über den Rohrstutzen (2) geschoben ist.

3. Kraftstoffbehälter nach Anspruch 1 oder 2, **dadurch gekennzeichnet, dass** die Manschette (4, 12) kegelförmig ausgeführt ist und mit ihrer weiten Öffnung den Rohrstutzen (2) umschließt.

4. Kraftstoffbehälter nach zumindest einem der vorhergehenden Ansprüche, **dadurch gekennzeichnet, dass** die Manschette (4) mit dem Einfüllrohr (5) einteilig verbunden ist.

5. Kraftstoffbehälter nach zumindest einem der vorhergehenden Ansprüche, **dadurch gekennzeichnet, dass** die Manschette (12) einen flexiblen Abschnitt (11) hat.

6. Kraftstoffbehälter nach zumindest einem der vorhergehenden Ansprüche, **dadurch gekennzeichnet, dass** die Manschette (4, 12) mittels einer Schnellkupplung (7) mit dem Kraftstoffbehälter (1, 9) verbunden ist.

7. Kraftstoffbehälter nach Anspruch 6, **dadurch gekennzeichnet, dass** die Kupplung (7) ein Bajonettverschluss ist.

8. Kraftstoffbehälter nach zumindest einem der vorhergehenden Ansprüche, **dadurch gekennzeichnet, dass** das Einfüllrohr (5, 10) ein Rückschlagventil (8) hat.

## Claims

1. Fuel tank (1, 9) with an orifice (6, 13) for the introduction of fuel and with a filler pipe (5, 10) projecting into the orifice (6, 13), with a sealing connection of the filler pipe (5, 10) to the fuel tank (1, 9), the filler pipe (5, 10) being spaced apart from the orifice (6, 13) in the radial direction, **characterized in that** the orifice (6, 13) is designed as a service or assembly orifice with a designated diameter which is large in relation to the filler pipe (5, 10), **in that** the sealing connection of the filler pipe (5, 10) to the fuel tank (1, 9) has a sleeve (4, 12) which bridges a gap between the orifice (6, 13) and the filler pipe (5, 10), and **in that** a connection of the sleeve (4, 12) to the fuel tank (1, 9) is designed to be releasable.

2. Fuel tank according to Claim 1, **characterized in that** said fuel tank (1, 9) has a filler neck (2) and the sleeve (4, 12) is pushed over the filler neck (2).

3. Fuel tank according to Claim 1 or 2, **characterized in that** the sleeve (4, 12) is designed conically and, with its wide orifice, surrounds the filler neck (2).

4. Fuel tank according to at least one of the preceding claims, **characterized in that** the sleeve (4) is connected in one piece to the filler pipe (5).

5. Fuel tank according to at least one of the preceding claims, **characterized in that** the sleeve (12) has a flexible portion (11).

6. Fuel tank according to at least one of the preceding claims, **characterized in that** the sleeve (4, 12) is connected to the fuel tank (1, 9) by means of a quick-acting coupling (7).

7. Fuel tank according to Claim 6, **characterized in that** the coupling (7) is a bayonet fastening.

8. Fuel tank according to at least one of the preceding claims, **characterized in that** the filler pipe (5, 10) has a nonreturn valve (8).

## Revendications

1. Réservoir de carburant (1, 9) comprenant un orifice (6, 13) pour le remplissage de carburant et comprenant un tube de remplissage (5, 10) dépassant dans l'orifice (6, 13), comprenant un raccordement étanche du tube de remplissage (5, 10) au réservoir de carburant (1, 9), le tube de remplissage (5, 10) étant distancé de l'orifice (6, 13) en sens radial, **caractérisé en ce que** l'orifice (6, 13) est exécuté comme orifice d'entretien ou de montage ayant un grand diamètre prévu par rapport au tube de remplissage (5, 10), **en ce que** le raccordement étanche du tube de remplissage (5, 10) au réservoir de carburant (1, 9) présente une manchette (4, 12) surmontant un espace entre l'orifice (6, 13) et le tube de remplissage (5, 10) et **en ce qu'**un raccordement de la manchette (4, 12) au réservoir de carburant (1, 9) est exécuté de manière amovible.

2. Réservoir de carburant selon la revendication 1, **caractérisé en ce que** le réservoir de carburant (1, 9) a une tubulure (2) et **en ce que** la manchette (4, 12) est poussée sur la tubulure (2).

3. Réservoir de carburant selon la revendication 1 ou 2, **caractérisé en ce que** la manchette (4, 12) est exécutée de manière conique et qu'elle entoure la tubulure (2) avec son orifice large.

4. Réservoir de carburant selon au moins l'une quelconque des revendications précédentes, **caractérisé en ce que** la manchette (4) est raccordée d'une seule pièce au tube de remplissage (5).

5. Réservoir de carburant selon au moins l'une quelconque des revendications précédentes, **caractérisé en ce que** la manchette (12) a un segment (11) flexible.

6. Réservoir de carburant selon au moins l'une quelconque des revendications précédentes, **caractérisé en ce que** la manchette (4, 12) est raccordée au réservoir de carburant (1, 9) au moyen d'un raccord rapide (7).

7. Réservoir de carburant selon la revendication 6, **caractérisé en ce que** le raccord (7) est une fermeture à baïonnette.

8. Réservoir de carburant selon au moins l'une quelconque des revendications précédentes, **caractérisé en ce que** le tube de remplissage (5, 10) a un clapet anti-retour (8).
